# EUROPÄISCHE PATENTSCHRIFT

(11) **EP 3 509 877 B1**
(45) Veröffentlichungstag und Bekanntmachung des Hinweises auf die Patenterteilung: **28.10.2020**
(21) Anmeldenummer: 17765415.9
(22) Anmeldetag: 08.09.2017
(51) Int. Cl.: B60D 1/06

(54) **ANHÄNGEKUPPLUNG MIT EINEM KUPPLUNGSARM**
TRAILER COUPLING WITH A COUPLING ARM
ATTELAGE DE REMORQUE MUNI D'UN BRAS D'ATTELAGE

(30) Priorität: 09.09.2016 DE 102016117017
(43) Veröffentlichungstag der Anmeldung: 17.07.2019
(73) Patentinhaber: WESTFALIA - Automotive GmbH, 33378 Rheda-Wiedenbrück (DE)
(72) Erfinder: ANGERMANN, Kay, 04720 Döbeln (DE); BECKER, Florian, 32351 Stemwede (DE); GROSS, Waldemar, 48165 Münster (DE); KLEINHANS, Björn, 33442 Herzebrock-Clarholz (DE); WEINER, Marc, 33332 Gütersloh (DE)
(74) Vertreter: Patentanwälte Bregenzer und Reule Partnerschaftsgesellschaft mbB
(86) Internationale Anmeldenummer: PCT/EP2017/072573
(87) Internationale Veröffentlichungsnummer: WO 2018/046658

(56) Entgegenhaltungen:
- EP-A1- 3 045 328
- DE-U1-202013 000 779
- US-A- 6 139 043
- US-B1- 9 114 678

## Beschreibung

Die Erfindung betrifft eine Anhängekupplung für ein Kraftfahrzeug, mit einem Kupplungsarm, an dessen freiem Längsendbereich ein Kupplungskörper, insbesondere eine Kupplungskugel, gemäß dem Oberbegriff des Anspruchs 1.

Eine derartige Anhängekupplung ist z.B. in EP 3 045 328 A1 erläutert.

Kupplungsarme haben in der Regel einen T-förmigen oder Doppel-T-förmigen Querschnitt, d.h. einander gegenüberliegende, sich entlang des Längsverlaufs des Kupplungsarms erstreckende Traggurte. Bei einem Doppel-T-förmigen Querschnitt bilden die Traggurte beispielsweise obere und untere Traggurte bezüglich der Gebrauchsstellung des Kupplungsarms. Bei einem T-förmigen Querschnitt ist ein in Bezug auf die Gebrauchsstellung des Kupplungsarms breiter oberer Traggurt vorgesehen, von dem ein Steg absteht, der den unteren Traggurt als Ganzes darstellt oder dessen freier Endbereich den unteren Traggurt darstellt.

Bei einem aus DE 10 2009 050 932 A1 bekannten Kupplungsarm ist beispielsweise zwischen den Traggurten eine Aufnahmeöffnung für ein Abreißseil eines Anhängers vorgesehen. Dadurch wird der Kupplungsarm etwas leichter. Weiterhin zeigt diese Schrift einen Kupplungsarm, bei dem für eine Steckdose bzw. eine Anhänger-Kontakteinheit ein Durchbruch vorhanden ist, der sich zwischen den Traggurten quer zum Längsverlauf des Kupplungsarms erstreckt. Mithin ist es also üblich, dass die Traggurte durch einen Steg miteinander verbunden sind, an dem allenfalls einzelne Durchbrüche vorgesehen sind. Die bekannten Kupplungsarme sind jedoch schwer, was für den zunehmenden Trend zum Leichtbau bei Kraftfahrzeugen kontraproduktiv ist.

Es ist daher die Aufgabe der vorliegenden Erfindung, eine belastbare, jedoch leichte Anhängekupplung bereitzustellen.

Zur Lösung der Aufgabe ist eine Anhängekupplung gemäß der technischen Lehre des Anspruchs 1 vorgesehen.

Es ist ein Grundgedanke der vorliegenden Erfindung, dass die Traggurte in an sich bekannter Weise sozusagen die Hauptlast vom Kupplungskörper in Richtung des Halteendes übertragen, die beim Fahrbetrieb auftritt, d.h. bei der Nutzung des Kupplungsarms mit einem Lastenträger oder einem Anhänger. Somit können durch die Traggurte beispielsweise Zugkräfte, Druckkräfte, Stützlasten und dergleichen anhand der Traggurte vom Kupplungskörper in Richtung Fahrzeug übertragen werden. Zwischen den Traggurten ist eine Mehrzahl von Verbindungsstreben vorgesehen, die den Kupplungsarm versteifen und Kräfte vom einen Traggurt zum anderen Traggurt übertragen. Somit kann beispielsweise eine auf einen oberen Traggurt wirkende Zugspannung oder Druckspannung über die Verbindungsstreben auf den unteren Traggurt übertragen werden und umgekehrt eine ähnliche Kraftübertragung vom unteren Traggurt zum oberen Traggurt stattfinden.

Die Verbindungsstreben bilden eine Art Fachwerkstruktur oder Rippenstruktur, die bedarfsgerecht Kräfte zwischen den Traggurten überträgt und somit den Kupplungsarm aussteift, ohne dass dieser übermäßig schwer ist.

Zwischen den Verbindungsstreben sind nämlich beispielsweise Durchtrittsöffnungen vorhanden oder auch Wandabschnitte, die jedoch im Vergleich zu den Verbindungsstreben einen geringeren Querschnitt aufweisen und somit zum Leichtbau beitragen. Ohne weiteres können derartige Wandabschnitte auch zur Versteifung bzw. höheren Belastbarkeit des Kupplungsarms beitragen.

An vorbestimmten Orten können Abstände zwischen den Verbindungsstreben für weitere Funktionen genutzt werden, beispielsweise zur Aufnahme einer Anhänger-Kontakteinheit, eines Abreißseils oder dergleichen.

Bevorzugt sind entlang des Längsverlaufs des Kupplungsarms eine Mehrzahl oder Vielzahl von Verbindungsstreben vorgesehen, beispielsweise mindestens drei Verbindungsstreben, mindestens vier Verbindungsstreben, mindestens fünf Verbindungsstreben oder dergleichen.

Die Verbindungsstreben können beispielsweise in einer Reihenanordnung bezüglich des Längsverlaufs hintereinander angeordnet sein.

Es ist auch möglich, dass sich Verbindungsstreben kreuzen und/oder aneinander abgestützt sind.

Wie erläutert ist es vorteilhaft möglich, dass zwischen mindestens zwei Verbindungsstreben eine Durchtrittsöffnung vorhanden ist. Die Durchtrittsöffnung ermöglicht es, dass quer zum Längsverlauf Gegenstände durch den Abstand zwischen den Verbindungsstreben und den Traggurten hindurchgeführt werden können, beispielsweise ein Abreißseil oder dergleichen. Die Durchtrittsöffnung kann aber auch dazu dienen, beispielsweise eine Steckdose oder sonstige Kontakteinheit zur Herstellung elektrischer und/oder optischer Verbindungen zwischen einem Bordnetz des Kraftfahrzeugs und einem Anhänger oder Lastenträger aufzunehmen. Es versteht sich, dass mehrere derartige Durchtrittsöffnungen vorhanden sein können.

Vorteilhaft ist aber auch, wenn quer zu dem Längsverlauf des Kupplungsarms zwischen mindestens zwei entlang des Längsverlaufs hintereinander angeordneten Verbindungsstreben mindestens ein Wandabschnitt vorhanden ist. Mindestens eine Verbindungsstrebe, vorzugsweise beide Verbindungsstreben, die neben dem Wandabschnitt angeordnet sind, steht quer zu dem Längsverlauf zu mindestens einer Seite vor. Bevorzugt ist es, wenn die entlang des Längsverlaufs hintereinander angeordneten Verbindungsstreben an einander entgegengesetzten Seiten jeweils vor den mindestens einen Wandabschnitt vorstehen. Somit ist der Wandabschnitt sozusagen beidseits durch die Verbindungsstreben verstärkt. Auch in diesem Zusammenhang ist festzuhalten, dass mehrere durch Wandabschnitte sozusagen verschlossene Abstände zwischen im Längsverlauf des Kupplungsarms hintereinander oder nebeneinander angeordneten Verbindungsstreben vorgesehen sein können.

Ohne weiteres sind auch Kombinationen dieser Maßnahme und der vorher erläuterten Maßnahmen möglich, das heißt, dass an ein und demselben Kupplungsarm mindestens eine Durchtrittsöffnung oder mehrere Durchtrittsöffnungen zwischen Verbindungsstreben und mindestens ein Wandabschnitt oder mehrere Wandabschnitte zwischen Verbindungsstreben vorhanden sind.

Bevorzugt ist es, wenn mindestens einer der Traggurte, vorzugsweise beide Traggurte oder alle Traggurte, an mindestens einer Seite vor den mindestens einen Wandabschnitt vorstehen. Der Wandabschnitt ist also sozusagen schmaler als die Traggurte im Querschnitt des Kupplungsarms bezüglich des Längsverlaufs, während mindestens einer der Traggurte an einer oder beiden Seiten quer zum Längsverlauf vor den Wandabschnitt vorsteht.

Beispielsweise ist es möglich, dass die Traggurte und der Wandabschnitt einen T-förmigen oder Doppel-T-förmigen Querschnitt ausbilden. Unter einem Doppel-T-förmigen Querschnitt soll ein Querschnitt verstanden werden, der in der Art eines Doppel-T-Profils ausgestaltet ist, d.h. die beiden Buchstaben T sozusagen einander entgegengesetzt orientiert sind. Der Querschnitt kann auch knochenförmig sein.

Vorteilhaft ist es weiterhin, wenn der Wandabschnitt schmaler als mindestens einer der Traggurte ist und an einem von diesem Traggurt am weitesten entfernten Bereich der andere Traggurt als integraler Bestandteil dieses Wandabschnitts ausgebildet ist oder durch den Wandabschnitt gebildet ist. Der Wandabschnitt bildet sozusagen einen Steg, der vom einen Traggurt absteht und dessen freier Endbereich oder von diesem Traggurt am weitesten entfernter Bereich den anderen Traggurt ausbildet oder darstellt. Seitlich an diesem Wandabschnitt verlaufen die bereits erwähnten Verbindungsstreben zwischen den beiden Traggurten. Der breitere Traggurt kann beispielsweise einen bezogen auf die Gebrauchsstellung des Kupplungsarms oberen oder unteren Traggurt bilden.

Ein vorteilhaftes Konzept sieht vor, dass der Kupplungsarm an einem oder beiden der Längsendbereiche einen homogenen Querschnitt, beispielsweise einen im wesentlichen dreieckförmigen oder kreisrunden oder ovalen Querschnitt, einen T-förmigen oder Doppel-T-förmigen Querschnitt, und/oder keine Verbindungsstrebe aufweist. Mithin sind also die Verbindungsstreben vorteilhaft an einem mittleren Abschnitt zwischen den Längsendbereichen vorgesehen oder erstrecken sich jedenfalls nicht bis zu einem oder beiden Längsendbereichen, was aber möglich ist. Es ist auch möglich, dass an mindestens einem Längsendbereich kein Traggurt ausgebildet ist, sondern dass der bereits erwähnte homogene runde, ovale oder elliptische oder dreieckförmige Querschnitt vorhanden ist.

Es ist vorteilhaft, dass eine oder mehrere Verbindungsstreben sozusagen rechtwinkelig zu mindestens einem der Traggurte, insbesondere rechtwinkelig zu einem Längsverlauf des Kupplungsarms, verläuft oder rechtwinkelig zu dem Traggurt und/oder des Längsverlaufs des Kupplungsarms orientiert ist. Unter rechtwinkelig soll in diesem Zusammenhang ein 90° Winkel, aber auch eine geringfügige Abweichung davon verstanden werden, beispielsweise von 87-93°.

Bevorzugt und im Sinne einer optimalen Kraftübertragung kann es sein, wenn eine oder mehrere der Verbindungsstreben schräg verlaufen. So sieht eine vorteilhafte Maßnahme vor, dass mindestens eine Verbindungsstrebe eine Schrägneigung bezüglich des Längsverlaufs des Kupplungsarms aufweist. Aufgrund der Schrägneigung kann über die Verbindungsstrebe beispielsweise ausgehend von einer Krümmung oder eines Bogens des Kupplungsarms eine optimale Krafteinleitung oder Kraftübertragung vom einen Traggurt zum anderen Traggurt erfolgen.

Es ist, wie oben erwähnt, aber auch möglich, dass eine oder mehrere der Verbindungsstreben bezüglich des Längsverlaufs des Kupplungsarms im Wesentlichen rechtwinkelig zu mindestens einem der Traggurte orientiert ist bzw. sind.

Eine Kombination von bezüglich der Längserstreckung oder des Längsverlaufs des Kupplungsarms zu mindestens einem Traggurt schräggeneigten oder im wesentlichen rechtwinkeligen Verbindungsstreben ist ohne weiteres möglich.

Ein bevorzugtes Konzept sieht vor, dass der Kupplungsarm mindestens zwei entlang des Längsverlaufs hintereinander angeordnete Verbindungsstreben aufweist, die eine bezüglich des Längsverlaufs des Kupplungsarms gegensinnige Schrägneigung aufweisen. Beispielsweise können diese Verbindungsstreben X-förmig oder V-förmig angeordnet sein. Mit allgemeineren Worten ist es grundsätzlich möglich, dass sich die gegensinnig geneigten Verbindungsstreben kreuzen oder kreuzungsfrei bezüglich des Längsverlaufs hintereinander angeordnet sind. Die schräggeneigten Verbindungsstreben können beispielsweise optimal entgegengesetzte Kräfte, beispielsweise Zugkräfte und Schubkräfte oder nach vertikal unten wirkende Stützkräfte bzw. gegensinnig nach vertikal oben wirkende sozusagen negative Stützkräfte oder Zugkräfte, wie sie insbesondere beim Überfahren von Kuppen auftreten, zwischen den durch sie verbundenen Traggurten übertragen.

Es ist auch möglich, dass zwei oder mehrere Verbindungsstreben eine gleichsinnige Schrägneigung bezüglich des Längsverlaufs des Kupplungsarms aufweisen. Diese Verbindungsstreben können unmittelbar nebeneinander in Bezug auf den Längsverlauf des Kupplungsarms angeordnet sein. Es ist aber auch möglich, dass zwischen derart gleichsinnig geneigten Verbindungsstreben ein Abstand vorhanden ist, in welchem eine andere, nicht gleichsinnig geneigte, beispielsweise gegensinnig geneigte oder rechtwinkelig zum Traggurt und/oder zum Längsverlauf des Kupplungsarms verlaufende, Verbindungsstrebe angeordnet ist.

Sowohl die gegensinnig als auch die gleichsinnig in Bezug auf den Längsverlauf schräg geneigten Verbindungsstreben können unterschiedliche Schrägneigungswinkel in Bezug auf eine oder beide der Traggurte aufweisen.

Erfindungsgemäß ist vorgesehen, dass der Kupplungsarm mindestens eine Aufnahme für eine Kontakteinheit, z.B. eine Steckdose, zur Herstellung elektrischer und/oder optischer Verbindungen zwischen einem Bordnetz des Kraftfahrzeugs und einem Anhänger oder Lastenträger aufweist. Die Kontakteinheit weist beispielsweise elektrische und/oder optische Kontakte auf. Über die Kontakteinheit kann beispielsweise eine Beleuchtung eines Anhängers oder Lastenträgers mit Strom versorgt werden. Das Bordnetz kann beispielsweise durch ein Anhänger-Steuergerät dargestellt sein, d.h. dass zwischen dem Steuergerät und der Kontakteinheit elektrische und/oder optische Verbindungen vorhanden sind. Die Aufnahme kann beispielsweise eine Durchtrittsöffnung sein, in die die Kontakteinheit eingesteckt wird. So können beispielsweise an einer Seite der Durchtrittsöffnung die Kontakte für den Anhänger oder Lastenträger bereitstehen, an der anderen Seite der Durchtrittsöffnung ein Kabel oder eine sonstige Leitung aus der Kontakteinheit heraus zu beispielsweise dem Steuergerät oder dem Bordnetz führen. Es ist aber auch möglich, dass die Aufnahme einen Boden aufweist, d.h. dass sie nur an einer Seite offen ist. Bevorzugt verläuft eine Längsachse der Aufnahme quer dem Längsverlauf des Kupplungsarms.

Prinzipiell möglich ist es, dass die Aufnahme beispielsweise an einem der eingangs genannten Wandabschnitte vorgesehen ist, beispielsweise als eine Durchgangsbohrung oder eine Bohrung mit einem Boden in dem Wandabschnitt.

Eine bevorzugte Ausführungsform sieht vor, dass die Aufnahme an mindestens einer Seite, vorzugsweise beidseitig, durch eine sich zwischen den Traggurten erstreckende Verbindungsstrebe begrenzt ist. Ein Vorteil ergibt sich dadurch, dass die Verbindungsstreben sozusagen seitliche Halter oder Stützen für die Kontakteinheit darstellen. Der ohnehin vorhandene Freiraum zwischen den Verbindungsstreben wird sozusagen genutzt, um dort günstig eine Kontakteinheit unterzubringen.

Es ist aber ohne weiteres möglich und bei dem in der Zeichnung dargestellten Ausführungsbeispiel auch der Fall, dass zusätzlich zu einer oder mehreren Verbindungsstreben, die die Aufnahme für die Kontakteinheit seitlich begrenzen, weitere Verbindungsstreben vorhanden sind. So sieht die Erfindung vor, dass der Kupplungsarm bezüglich seines Längsverlaufs mindestens eine Verbindungsstrebe, vorzugsweise eine Mehrzahl von Verbindungsstreben, in einem Abstand zu der Aufnahme für die Kontakteinheit aufweist. Somit sind also bezüglich des Längsverlaufs des Kupplungsarms weitere, von der Aufnahme für die Kontakteinheit beabstandete, Verbindungsstreben vorteilhaft. Es ist dabei möglich, dass die Aufnahme für die Kontakteinheit nahe bei dem Kupplungskörper, insbesondere der Kupplungskugel, angeordnet ist, also nahe beim freien Endbereich des Kupplungsarms und zwischen der Aufnahme für die Kontakteinheit und dem Kupplungskörper keine oder maximal eine oder zwei Verbindungsstreben angeordnet sind, während zwischen der Aufnahme für die Kontakteinheit und dem Halteende des Kupplungsarms eine Mehrzahl von Verbindungsstreben vorgesehen sind.

Vorteilhaft ist es, wenn der Querabstand zwischen den Traggurten im Bereich der Aufnahme für die Kontakteinheit größer als in Bezug auf den Längsverlauf des Kupplungsarms neben der Aufnahme für die Kontakteinheit ist. Mithin haben also die Traggurte im Bereich der Kontakteinheit einen größeren Abstand zueinander, so dass dort die Kontakteinheit bequem Platz finden kann.

Mindestens einer der Traggurte erstreckt sich zweckmäßigerweise an der Unterseite oder der Oberseite des Kupplungsarms, wenn dieser seine zum Tragen eines Lastenträgers oder zum Ziehen eines Anhängers geeignete und vor ein Heck des Kraftfahrzeugs vorstehende Gebrauchsstellung einnimmt. Ohne weiteres möglich ist es aber auch, dass mindestens ein Traggurt sozusagen einen seitlichen Traggurt darstellt, das heißt, dass der Traggurt nicht oben oder unten in der Gebrauchsstellung des Kupplungsarms angeordnet ist, sondern an dessen Querseite verläuft.

Vorteilhaft ist vorgesehen, dass ein Querschnitt des Kupplungsarms durch mindestens eine Verbindungsstrebe, die die im Querabstand zueinander einander gegenüberliegenden Traggurte verbindet, dreieckförmig oder V-förmig ist.

Weiterhin ist es vorteilhaft, wenn ein Traggurt quer zum Längsverlauf des Kupplungsarms mindestens doppelt so breit, vorzugsweise mindestens dreimal so breit, oder jedenfalls zumindest etwas breiter wie ein weiterer Traggurt oder der andere Traggurt ist. Der breitere Traggurt kann beispielsweise den in Gebrauchslage des Kupplungsarms oberen Traggurt, der schmalere Traggurt den in Gebrauchslage des Kupplungsarms unteren Traggurt bilden oder umgekehrt.

Ohne weiteres ist auch eine Verbindungsstrebe möglich, die beispielsweise einen runden, insbesondere kreisrunden oder elliptischen Querschnitt aufweist.

Es ist auch möglich, dass eine Außenumfangskontur des Kupplungsarms im Bereich mindestens einer Verbindungsstrebe knochenförmig oder dreieckförmig oder V-förmig ist.

Der Kupplungsarm besteht zweckmäßigerweise ganz oder teilweise aus Metall, insbesondere Eisenmetall, Stahl, Aluminium oder dergleichen. Ferner kann der Kupplungsarm aus Metalllegierungen bestehen oder Metalllegierungen aufweisen.

Weiterhin ist es möglich, dass der Kupplungsarm ganz oder teilweise aus Kunststoff besteht, insbesondere aus einem faserverstärkten Kunststoff. Der Kunststoff kann beispielsweise mit Kohlefasern/oder Glasfasern verstärkt sein.

Insbesondere ist vorgesehen, dass die Traggurte und die Verbindungsstreben aus mindestens einem der vorgenannten Metalle oder einer Metalllegierung oder aus Kunststoff bestehen.

Vorteilhaft ist es, wenn das Material der Traggurte und der Verbindungsstreben das gleiche Material ist, beispielsweise Stahl, Aluminium oder dergleichen. Insbesondere vorteilhaft ist es, wenn die Verbindungsstreben und die Traggurte einstückig oder aus einem Rohling oder in einem Guss hergestellt sind.

Eine zweckmäßige Maßnahme sieht vor, dass mindestens eine Verbindungsstrebe und/oder mindestens ein Traggurt an mindestens einer Queraußenseite eine ausgerundete oder gekrümmte Außenkontur aufweist.

Die Radien oder Rundungen ermöglichen insbesondere eine homogene und belastungsgerechte Ausbildung von Faserstrukturen im Gefüge, wenn der Kupplungsarm anhand einer Massivumformung hergestellt wird, beispielsweise Schmieden oder dergleichen.

An dieser Stelle sei erwähnt, dass insbesondere eine Warmumformung im Bereich von 950-1250° vorteilhaft ist. Beispielsweise kommt ein sogenanntes Gesenkschmieden als vorteilhafte Maßnahme zur Herstellung des Kupplungsarms zum Einsatz.

Es eignen sich höherfeste Baustähle, insbesondere S355, zur Herstellung eines erfindungsgemäßen Kupplungsarms. Weiterhin zweckmäßig sind auch sogenannte AFP-Stähle, wie beispielsweise 30MnVS6 oder 38MnVS6. Das erfindungsgemäße Konzept ermöglicht insbesondere auch den Einsatz von Vergütungsstählen wie z.B. 42CrMo4 oder 20NiMoCr mit entsprechender Wärmebehandlung durch Vergüten (Härten und Anlassen) zur Herstellung des Kupplungsarms. Ferner seien bainitische Stähle, wie z.B. H2-Stahl, bei denen gezielt die Festigkeitseigenschaften des Zwischenstufengefüges und der damit verbundenen dynamischen Belastungsfähigkeit genutzt werden, als geeignete Materialien für den Kupplungsarm erwähnt.

Vorteilhaft kann der Kupplungsarm auch anhand einer sogenannten Halbwarmumformung in einem Temperaturbereich von etwa 400-750° vorteilhaft hergestellt werden. Beispielweise eignet sich als Herstellungsmaßnahme das sogenannte Präzisionsschmieden, auch Feinschmieden genannt, im Gesenk. Eine im Prozess integrierte Wärmebehandlung oder auch eine anschließende Eigenschaftsoptimierung durch werkstoffspezifische Härteprozesse sind bei dem Kupplungsarm zweckmäßig. Für die Halbwarmumformung sind Werkstoffe wie z.B. C45-Stahl oder auch höherlegierte Stähle vorteilhaft.

Ohne weiteres kann der Kupplungsarm auch durch Gießen oder eine sonstige Urformung hergestellt werden.

Der Kupplungsarm kann auch aus anderen Metallen, z.B. Aluminium, hergestellt werden.

Zweckmäßig ist es, dass mindestens eine Verbindungsstrebe an einem Fußbereich, an welchem sie mit einem der Traggurte verbunden ist, einen größeren Querschnitt aufweist als an einem sich zwischen den Traggurten erstreckenden Zwischenabschnitt. Mithin ist also der Fußbereich sozusagen massiver als der Zwischenabschnitt. Der Fußbereich ist zweckmäßigerweise ausgerundet, das heißt er verläuft vorteilhaft mit Rundungen oder Krümmungen zum jeweiligen Traggurt hin. Auch diese Maßnahme ist im Zusammenhang mit dem Urformen oder Umformen, insbesondere einer Warmumformung, bei der Herstellung des Kupplungsarms vorteilhaft. Darüber hinaus ist ein günstiger Kraftverlauf aus dem Traggurt in die Verbindungsstrebe oder umgekehrt aus der Verbindungsstrebe in den Traggurt hinein erzielbar.

Der Kupplungsarm kann an sich im Wesentlichen geradlinig sein. Bevorzugt ist jedoch eine an sich übliche Geometrie des Kupplungsarms, bei dem dieser entlang des Längsverlaufs mindestens eine Krümmungspartie, insbesondere mindestens zwei Krümmungspartien, aufweist. Beispielsweise verläuft der Kupplungsarm in der Gebrauchsstellung bogenförmig von dem Halteende nach unten (in Richtung einer Fahrbahnoberfläche), hat dann einen geraden oder bogenförmigen Abschnitt und geht weiter in einen bogenförmigen Abschnitt über, an dessen freiem Endbereich der Kupplungskörper angeordnet ist.

Zum Kupplungskörper sei angemerkt, dass dieser vorteilhaft eine Kupplungskugel ist oder umfasst. Es sind aber auch andere Kupplungskörper möglich, beispielsweise Steckaufnahmen, Steckköpfe oder dergleichen, z.B. zum Befestigen eines Lastenträgers. Insbesondere können am Kupplungskörper auch Verdrehsicherungskonturen vorgesehen sein. Der Kupplungskörper kann eine polygonale Kontur aufweisen.

Bevorzugt ist vorgesehen, dass die Querschnitte der Verbindungsstreben und/oder die Abstände zwischen den Verbindungsstreben und/oder eine Winkelorientierung der Verbindungsstreben relativ zueinander in Bezug auf einen Kraftverlauf entlang des Kupplungsarms bei Benutzung durch einen Lastenträger oder Anhänger angepasst ist. So können beispielsweise in einem Bereich größerer Krafteinwirkung bzw. eines größeren Bedarfs zur Kraftübertragung zwischen den Traggurten die Verbindungsstreben enger platziert sein und/oder massiver ausfallen. Bereiche, bei denen kleinere Kräfte zu übertragen oder abzustützen sind, können mit dementsprechend weniger Verbindungsstreben oder schwächeren Verbindungsstreben ausgesteift sein. Auch die Winkelorientierung, beispielsweise eine rechtwinkelige Anordnung einer Verbindungsstrebe zum Traggurt oder eine Schrägneigung bzw. die Orientierung der Schrägneigung der Strebe zum jeweiligen Traggurt kann an die jeweilige Belastungssituation optimal angepasst sein. Durch entsprechende Berechnungsprogramme, insbesondere Finite-Elemente-Berechnungen und/oder Topologieoptimierungen, ist es möglich, die Kraftverläufe eines Kupplungsarms zu simulieren und den Kupplungsarm entsprechend durch Verbindungsstreben bzw. durch die Ausgestaltung der Fachwerkstruktur und Rippenstruktur zu versteifen.

Einem typischen Kraftverlauf bzw. Belastungsprofil eines Kupplungsarms trägt die folgende Maßnahme Rechnung, bei der vorgesehen ist, dass die Querschnitte der Verbindungsstreben und/oder die Abstände zwischen den Verbindungsstreben und/oder eine Winkelorientierung der Verbindungsstreben relativ zueinander in Bezug auf einen Kraftverlauf entlang des Kupplungsarms bei Benutzung durch einen Lastenträger oder Anhänger angepasst ist.

Insbesondere an einem Längsabschnitt des Kupplungsarms zwischen Krümmungspartien ist die folgende Maßnahme vorteilhaft, die aber ohne weiteres auch in anderen Bereichen des Kupplungsarms Anwendung finden kann. Bei dieser Maßnahme ist vorgesehen, dass mindestens zwei Verbindungsstreben zur Übertragung von Zugkräften und Druckkräften zwischen den Traggurten im Sinne einer Kompensation von Zugspannungen und Druckspannungen entlang des Längsverlaufs nebeneinander angeordnet sind. Beispielsweise sind die Verbindungsstreben gegensinnig schräg geneigt, sodass sie den verschiedenen Belastungssituationen, beispielsweise Zugbetrieb und Schubbetrieb bzw. Schubkraft und Zugkraft, die auf den Kupplungsarm einwirken, Rechnung tragen können.

Vorteilhaft ist vorgesehen, dass von einem Traggurt ein Steg winkelig, insbesondere eine T-Form bildend, absteht, wobei ein am weitesten von dem Traggurt entfernter Abschnitt des Steges den anderen Traggurt bildet oder aufweist. Der Steg ist durch eine Mehrzahl von Verbindungsstreben seitlich versteift, sodass sich sozusagen entlang des Steges die Fachwerkstruktur oder Rippenstruktur der Verbindungsstreben erstreckt. Beispielsweise ist der Steg in der Gebrauchsstellung des Kupplungsarms im Wesentlichen vertikal orientiert, während der obere Traggurt horizontal orientiert ist.

Zwar sind die in der Zeichnung dargestellten Ausführungsbeispiele auf Kupplungsarme bezogen, die einen oberen und einen unteren oder jedenfalls nur zwei Traggurte aufweisen. Es versteht sich, dass nach dem erfindungsgemäßen Prinzip auch weitere Traggurte eines Kupplungsarms miteinander verbunden sein können. So sieht eine vorteilhafte Ausgestaltung der Erfindung vor, dass der Kupplungsarm mindestens drei Traggurte aufweist, die an Kantenbereichen des Kupplungsarms verlaufen und von denen mindestens zwei Traggurte anhand einer Mehrzahl von Verbindungsstreben miteinander verbunden sind beispielsweise sind die Traggurte dreieckförmig zueinander angeordnet. Zwei oder mehr, insbesondere alle, Traggurte sind durch Verbindungsstreben miteinander verbunden. Beispielsweise erhält der Kupplungsarm dadurch eine Art Gitterstruktur. Zwischen den Traggurten und den sie verbindenden Verbindungsstreben kann mindestens ein Hohlraum vorhanden sein. Der Hohlraum erstreckt sich vorzugsweise entlang des Längsverlaufs des Kupplungsarms, zumindest über einen Teilabschnitt des Längsverlaufs.

Die Anbindung des Kupplungsarms an das Kraftfahrzeug kann in verschiedenster Weise erfolgen.

So kann vorgesehen sein, dass an dem Halteende ein Steckvorsprung zum Einstecken in eine Steckaufnahme eines am Kraftfahrzeug befestigten oder befestigbaren Halters der Anhängekupplung angeordnet ist. Die Steckaufnahme ist beispielsweise an einer Steckhülse oder einem Rohr vorgesehen.

Weiterhin ist auch eine bewegliche Lagerung möglich, zum Beispiel eine Schwenklagerung und/oder Schiebelagerung des Kupplungsarms bezüglich eines Halters, der am Kraftfahrzeug befestigt ist. Dabei kann vorgesehen sein, dass an dem Halteende des Kupplungsarms ein Lagerkopf zum beweglichen Lagern an einem am Kraftfahrzeug befestigten oder befestigbaren Lager oder Halter vorhanden ist.

Schließlich ist auch eine feste und unbewegliche Montage des Kupplungsarms am Kraftfahrzeug möglich. Beispielsweise befindet sich an dem Halteende in diesem Fall mindestens eine Montagekontur, zum Beispiel eine oder mehrere Schrauböffnungen, Schraubvorsprünge oder dergleichen, wobei die Montagekontur zum Montieren an dem Kraftfahrzeug vorgesehen ist. Beispielsweise ist der Kupplungsarm mit dem Kraftfahrzeug, insbesondere einem Querträger, der am Heck des Kraftfahrzeugs verläuft, verschraubbar.

Nachfolgend werden Ausführungsbeispiele der Erfindung anhand der Zeichnung erläutert. Es zeigen:
- Figur 1: eine schräge Seitenansicht einer ersten Anhängekupplung, die in
- Figur 2: aus einer anderen Richtung perspektivisch schräg dargestellt ist,
- Figur 3: einen Kupplungsarm der Anhängekupplung gemäß Figuren 1, 2 in Seitenansicht,
- Figur 4: eine Schnittansicht durch den Kupplungsarm gemäß Figur 3 entlang einer Schnittlinie A-A gemäß Figur 3,
- Figur 5: eine Schnittansicht durch den Kupplungsarm gemäß Figur 3 entlang einer Schnittlinie B-B gemäß Figur 3,
- Figur 6: eine Schnittansicht durch den Kupplungsarm gemäß Figur 3 entlang einer Schnittlinie C-C,
- Figur 7: eine perspektivische Seitenansicht auf eine zweite Anhängekupplung von schräg unten,
- Figur 8: die Anhängekupplung gemäß Figur 7, jedoch schräg seitlich dargestellt,
- Figur 9: eine Seitenansicht eines Kupplungsarms der Anhängekupplung gemäß Figuren 7, 8, von dem in
- Figur 10: ein Querschnitt entlang einer Schnittlinie D-D in Figur 9 und in
- Figur 11: ein Querschnitt entlang einer Schnittlinie E-E in Figur 9 dargestellt sind,
- Figur 12: eine dritte Anhängekupplung perspektivisch schräg dargestellt, deren Kupplungsarm eine Aufnahme für eine Kontaktvorrichtung aufweist, und
- Figur 13: der Kupplungsarm der Anhängekupplung aus Figur 12 von der Seite her.

Eine Anhängekupplung 10 hat einen Kupplungsarm 11. Der Kupplungsarm 11 weist an einem Längsendbereich 12 einen Kupplungskörper 13, beispielsweise eine Kupplungskugel 14 oder einen sonstigen, insbesondere polygonalen Kupplungskörper (nicht dargestellt) auf. Ein dem Längsendbereich 12 entgegengesetzter Längsendbereich 15 des Kupplungsarms 11 weist ein Halteende 16 auf, welches zur Befestigung oder Lagerung des Kupplungsarms 11 an einem Kraftfahrzeug 90 vorgesehen ist.

An dem Halteende 16 ist ein Lagerkopf 17 vorgesehen, der eine Lageraufnahme 18 aufweist.

Zur Befestigung und Lagerung des Kupplungsarms 11 am Kraftfahrzeug 90 dient ein Halter 72, welcher an einer Tragstruktur 70 angeordnet ist. Die Tragstruktur 70 umfasst beispielsweise einen Querträger 71, welcher sich entlang einem hinteren Abschluss einer Karosserie 91 des Kraftfahrzeugs 90 erstreckt. Die Tragstruktur 70 ist in nicht dargestellter Weise mit der Karosserie 91 verbunden, beispielsweise anhand von sich seitlich in Fahrzeuglängsrichtung erstreckenden Seitenträgern, die vom Querträger 71 an dessen Längsendbereichen abstehen.

Der Halter 72 weist einen Lagervorsprung 73 auf, der in die Lageraufnahme 18 eingreift, sodass der Lagerkopf 17 bezüglich des Halters 72 um eine Schwenkachse S schwenkbar und/oder oder entlang der Schwenkachse S verschieblich gelagert ist. Eine derartige Verschieblichkeit dient beispielsweise dazu, Fixierstrukturen 19, insbesondere Formschlusskonturen, Kalotten oder dergleichen, in Eingriff mit nicht dargestellten Gegenkonturen bzw. Formschlusskonturen am Halter 72, die sich beispielsweise um den Lagervorsprung 73 herum erstrecken, zu bringen. Um diese formschlüssige Eingriffslage zu erhalten oder herzustellen können Betätigungsmittel vorgesehen sein, die jedoch in der Zeichnung nicht dargestellt sind.

Der Lagerkopf 17 und der Halter 72, insbesondere dessen Lagervorsprung 73, bilden ein Schwenklager 74.

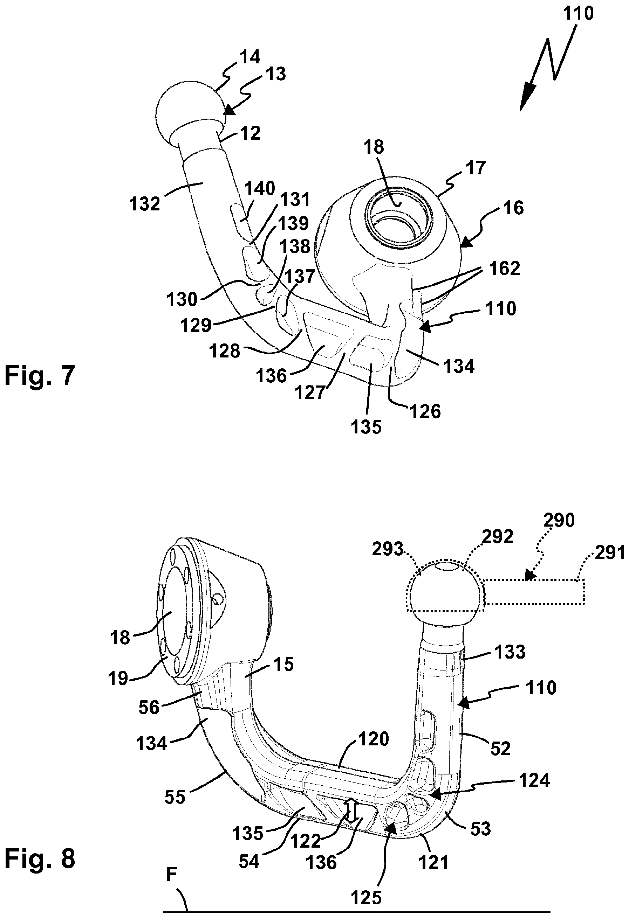

Der Kupplungsarm 11 kann zwischen einer zum Ziehen eines Anhängers 190 oder Tragen eines Lastenträgers 290 (vergleiche Figur 8) geeigneten Gebrauchsstellung G anhand des Schwenklagers 74 (es könnte auch ein Schiebelager oder ein Schwenk-Schiebelager vorgesehen sein) und einer einem Nichtgebrauch zugeordneten Nichtgebrauchstellung N verschwenkt werden. In der Gebrauchsstellung G steht der Kupplungskörper 13 nach hinten vor ein Heck des Kraftfahrzeugs 90 und zudem einen Stoßfänger 92 vor, sodass er für den Anhänger 90 bzw. den Lastenträger 290 zugänglich ist.

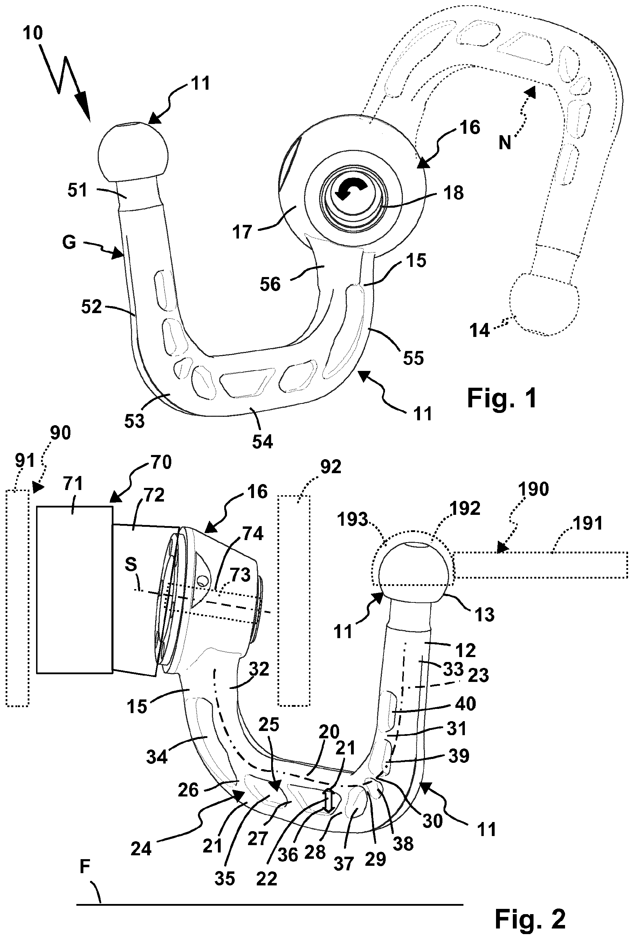

Der Kupplungsarm 11 weist beispielsweise einen Halsabschnitt 51 auf, an dem der Kupplungskörper 13 angeordnet ist. Der Halsabschnitt 51 ist an einem geraden, in der Gebrauchsstellung G nach oben vorstehenden Abschnitt 52 des Kupplungsarms 11 vorgesehen, der über eine Krümmungspartie 53 in einen geraden Abschnitt 54 übergeht. Der gerade Abschnitt 54 erstreckt sich in der Gebrauchsstellung G beispielsweise unterhalb des Stoßfängers 92. An den Abschnitt 54 schließt sich eine weitere Krümmungspartie 55 und anschließend noch ein gerader Abschnitt 56 an, der mit dem Lagerkopf 17 verbunden ist, sodass dadurch das Halteende 16 gebildet ist. In der Nichtgebrauchstellung N kann der Kupplungsarm 11 in Figur 1 angedeutet im Wesentlichen hinter den Stoßfänger 92 geschwenkt werden, sodass er nicht stört bzw. nicht sichtbar ist.

Beispielsweise hat der Anhänger 190 eine Deichsel 191, an deren freien Endbereich eine Zugkugelkupplung 192 angeordnet ist. Die Zugkugelkupplung 192 weist eine Kupplungsaufnahme 193 auf, in die der Kupplungskörper 13 oder die Kupplungskugel 14 aufgenommen werden kann. Der Kupplungskörper 13 und die Kupplungsaufnahme 192 bilden in an sich bekannter Weise ein Schwenklager.

Der Lastenträger 290, beispielsweise ein Fahrradträger, ist nur schematisch angedeutet. Er weist beispielsweise eine Tragstruktur 291, insbesondere mit Trägerrinnen oder dergleichen, zum Tragen einer Last, insbesondere von Fahrrädern auf. An der Tragstruktur 291 ist eine Kupplungsvorrichtung 292, beispielsweise eine Klemmvorrichtung, vorgesehen, in deren Kupplungsaufnahme 293 der Kupplungskörper 13, insbesondere die Kupplungskugel 14, eintauchen kann. Die Kupplungsvorrichtung 292 klemmt den Kupplungskörper 13 anhand von in der Zeichnung nicht dargestellten Klemmmitteln.

Der Anhänger 190 oder der Lastenträger 290 können eine große Masse aufweisen, wodurch der Kupplungsarm 11 stark belastet ist. Der Kupplungsarm 11 kann trotz seiner nachfolgend erläuterten Leichtbauweise diesen Belastungen standhalten und entsprechende Lasten tragen oder ziehen.

Der Kupplungsarm 11 weist einen in der Gebrauchsstellung G oberseitig angeordneten Traggurt 20 und einen in der Gebrauchsstellung G unteren oder unterseitig angeordneten Traggurt 21 auf, die einen Querabstand 22 zueinander aufweisen. Die Traggurte 20, 21 erstrecken sich zwischen den Längsendbereichen 12, 15 mit einem Längsverlauf 23, der dem Längsverlauf des Kupplungsarms 11 entspricht, also beispielsweise den Abschnitten bzw. Partien 52-56 folgt. Prinzipiell denkbar wäre es nunmehr, die Traggurte 20, 21 anhand einer durchgehenden Wand oder eines durchgehenden Steges in der Art eines Doppel-T-Profils miteinander zu verbinden. Dadurch würde jedoch der Kupplungsarm 11 in an sich bekannter Weise schwer ausfallen, ohne eine in allen Situationen zufriedenstellende Belastbarkeit aufzuweisen. Gerade dieses Problem ist jedoch beim Kupplungsarm 11 nicht vorhanden.

Die Traggurte 20, 21 sind durch eine Fachwerkstruktur 24 oder Rippenstruktur 25 miteinander verbunden, die eine Mehrzahl von Verbindungsstreben 26, 27, 28, 29, 30, 31 aufweist. Die Verbindungsstreben 26-31 erstrecken sich insbesondere im Bereich der Krümmungspartie in 53, 55 sowie der geraden Abschnitte 54, 56.

Nahe bei den Längsendbereichen 12, 15 hingegen sind Abschnitte 32, 33 vorgesehen, die keine Verbindungsstrebe aufweisen, also eine homogene Struktur oder einen homogenen Querschnitt haben. Beispielsweise sind die Abschnitte 32, 33 im Querschnitt etwa kreisrund oder elliptisch oder oval. Ohne weiteres sind auch andere, keine Aussparungen oder Vertiefungen oder nur geringe Aussparungen und Vertiefungen aufweisende Querschnitte in derartigen Bereichen eines erfindungsgemäßen Kupplungsarms möglich, zum Beispiel T-Profile oder Doppel-T-Profile, Dreieckprofile, rechteckige Profile oder dergleichen.

Prinzipiell möglich wäre es, dass sich die Traggurte 20, 21 auch in die Abschnitte 32, 33 hinein erstrecken und dort beispielsweise durch eine Stegwand miteinander verbunden sind, sodass zum Beispiel ein Doppel-T-Profil gebildet ist.

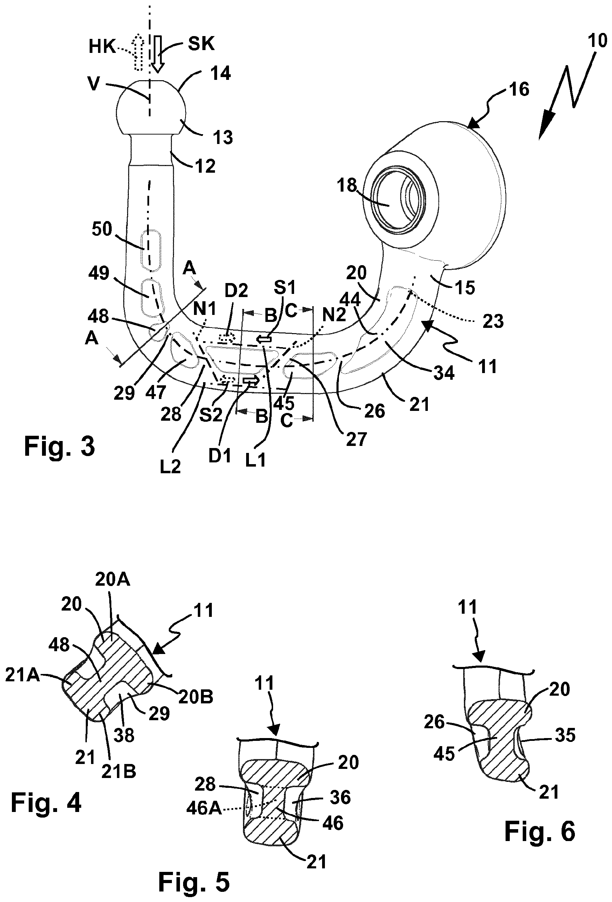

Zwischen den Verbindungsstreben 26-31 sind Aussparungen 34, 35, 36, 37, 38, 39, 40 vorgesehen, die beispielsweise offen sein können, wie im Falle einer Durchtrittsöffnung 46A, die in Figur 5 angedeutet ist, bevorzugt jedoch durch Wandabschnitte 44, 45, 46, 47, 48, 49, 50 verschlossen sind. Die Wandabschnitte 44-50 sind schmaler als seitlich vor die Wandabschnitte 44-50 vorstehende Partien 20A, 20B des Traggurts 20 sowie Partien 21A, 21B des Traggurts 21 (Figur 4). Dadurch wird ein Doppel-T-Profil gebildet.

Erwähnt sei allerdings, dass auch ein C-förmiges Profil, wenn beispielsweise nur die Partien 21A, 20A oder 20B und 21B vorhanden sind, oder ein Z-förmiges Profil möglich wäre, wenn beispielsweise nur die Partien 20A und 21B oder 20B und 21A vorhanden sind. Die Versteifung der Traggurte 20, 21 anhand der Verbindungsstreben 26-31 ist auch in diesen Fällen möglich.

Eine Querbreite der Verbindungsstreben 26-31 entspricht etwa einer Querbreite der Traggurte 20, 21, also der Querbreite einschließlich der Partien 20A, 20B des Traggurts 20 sowie der Querbreite einschließlich der Partien 21A, 21B des Traggurts 21. Der Traggurt 21 ist vorzugsweise etwas schmaler quer zum Längsverlauf 23 als der Traggurt 20. Dementsprechend ist es vorteilhaft, wenn die Verbindungsstreben 26-31 im Bereich des Traggurts 20 etwa die Querbreite des Traggurts 20 haben und im Bereich des Traggurts 21 dessen Querbreite aufweisen. Somit gehen die Verbindungsstreben 26-31 sozusagen homogen in die jeweiligen Traggurte 20, 21 über.

Die Aussparung 34 ist bezüglich des Längsverlaufs 23 länger als die anderen Aussparungen am Kupplungsarm 11. Dem entsprechend ist der Kupplungsarm in diesem Bereich verhältnismäßig schwach ausgeprägt, d.h. die am Kupplungskörper 13 angreifende Stützlast und Zuglast wird im Wesentlichen durch die oberen und unteren Traggurte 20, 21 abgefangen. Allerdings kann die in der Gebrauchslage G vertikal verlaufende Wand 44 durchaus beachtliche Lasten tragen.

Man erkennt hingegen, dass beispielsweise die Aussparungen 37-40 deutlich kleiner sind, d.h. dass im Krümmungsbereich beziehungsweise in der Krümmungspartie 53 verhältnismäßig viele und somit eine optimale Versteifung des Kupplungsarms 11 realisierende Verbindungsstreben 29, 30, 31 vorhanden sind. Somit ist der Kupplungsarm 11 gerade im Bereich der Krümmungspartie 55 besonders steif und belastbar.

Ohne weiteres wäre aber auch die umgekehrte, in der Zeichnung nicht dargestellte Konfiguration möglich, dass nämlich im Bereich der durch relativ hohe Drehmomente belasteten Krümmungspartie 55, wenn eine relativ hohe Stützlast SK oder entgegengesetzte sozusagen negative Stützlast HK oder Hubkraft am Kupplungskörper 13 in bei Gebrauchslage G vertikaler Richtung angreift, durch massive und/oder engem Abstand platzierte Verbindungsstreben (nicht dargestellt) besonders belastbar ist.

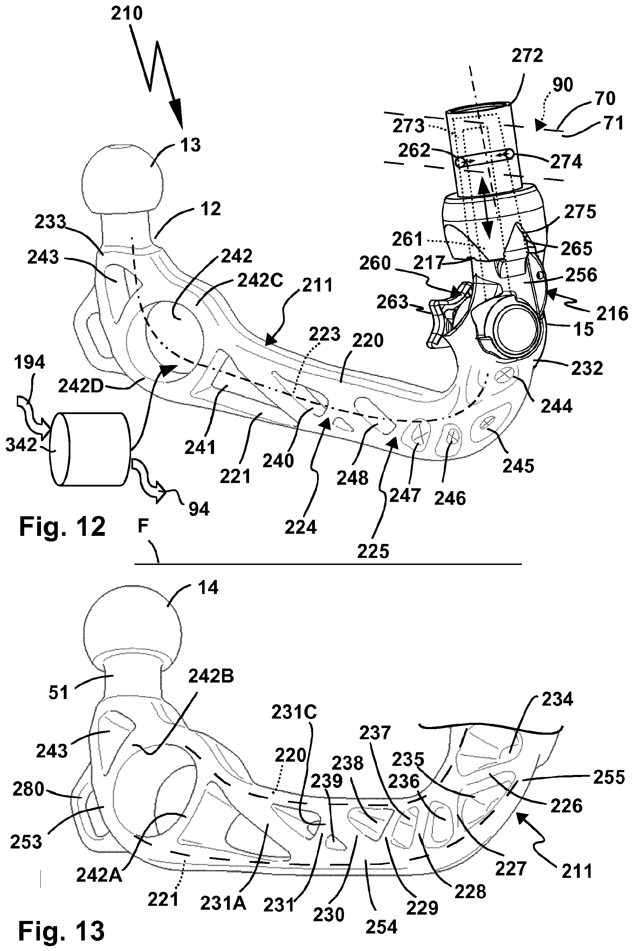

Die Verbindungsstreben 31 und 30 verlaufen im wesentlichen rechtwinkelig zu den Traggurten 20, 21. Eine Schrägneigung N1 und/oder eine Schrägneigung N2 kann jedoch zu einer deutlich verbesserten Belastbarkeit beitragen, beispielsweise bei Angreifen der beiden Lasten HK und SK, siehe dazu Figur 3. Beispielsweise sind die Verbindungsstreben 28, 27 gegensinnig schräg geneigt mit einer Schrägneigung N1 und Schrägneigung N2 bezüglich des Längsverlaufs oder der Längsachsen L1, L2 der Traggurte 20, 21 im Bereich des geraden Abschnitts 54. Die Schrägneigungen N1 und N2 sind beispielsweise in Bezug auf die Achsen L1, L2 in einem Winkelbereich von 35-55°, insbesondere 45°, bzw. dem jeweils komplementären stumpfen Winkel, vorgesehen
An dieser Stelle sei bemerkt, dass bei einem Kupplungsarm gemäß der Erfindung die Traggurte zwar in der Regel parallel oder im Wesentlichen parallel nebeneinander verlaufen. Es kann aber auch sein, dass Traggurte winkelig zueinander verlaufen, d.h. dass zueinander hin oder zueinander weg verlaufende Traggurte zumindest abschnittsweise bei einem Kupplungsarm vorgesehen sind, wie später noch beim Ausführungsbeispiel gemäß Figur 12 im Zusammenhang mit der Aufnahme 242 für eine Kontakteinheit 341 deutlich wird.

Anhand der Verbindungsstreben 27, 28 kann beispielsweise eine durch die Stützkraft SK verursachte und auf den unteren Traggurt 21 einwirkende Druckspannung D1 im Sinne einer Kompensation einer Zugspannung S1 wirken, die durch die Last SK im oberen Traggurt 20 verursacht wird. Wenn jedoch bei der Last HK im oberen Traggurt 20 eine Druckkraft D2 auftritt, übertragen die Verbindungsstreben 27, 28 diese Druckkraft D2 im Sinne einer Kompensation einer Zugkraft S2 auf den unteren Traggurt 21.

Es versteht sich, dass zu einer günstigen Kraftübertragung auch weitere Verbindungsstreben schräg geneigt sein können. So sind beispielsweise die Verbindungsstreben 26, 27 gleichsinnig schräg geneigt, während gegensinnig dazu nicht nur die Verbindungsstrebe 28, sondern auch die Verbindungsstreben 29 geneigt ist.

Bei einer Anhängekupplung 110 gemäß Figuren 7-11 sind teilweise ähnliche oder gleichartige Bestandteile vorhanden wie bei der Anhängekupplung 10. Zur Vereinfachung sind teilweise dieselben Bezugszeichen verwendet, teilweise auch Bezugszeichen, die um 100 größer sind als beim Ausführungsbeispiel gemäß Figuren 1-6.

Ein Kupplungsarm 111 der Anhängekupplung 110 weist zwischen seinen Längsendbereichen 12, 15 einen Längsverlauf 123 auf, der sehr ähnlich dem Längsverlauf 23 ist, so das beispielsweise gerade Abschnitte und Krümmungspartien entsprechend den geraden Abschnitten 52, 54, 56 sowie den Krümmungspartien 53, 55 vorhanden sind. Am Längsendbereich 12 ist in an sich schon erläuterter Weise ein Kupplungskörper 13 in Gestalt einer Kupplungskugel 14 vorgesehen. Das Halteende 16 ist ebenfalls vorhanden, das heißt auch der Kupplungsarm 111 kann an dem Schwenklager 74 bzw. dem Lagervorsprung 73 schwenkbar zwischen der Gebrauchsstellung G und der Ruhestellung oder Nichtgebrauchstellung N gelagert seien.

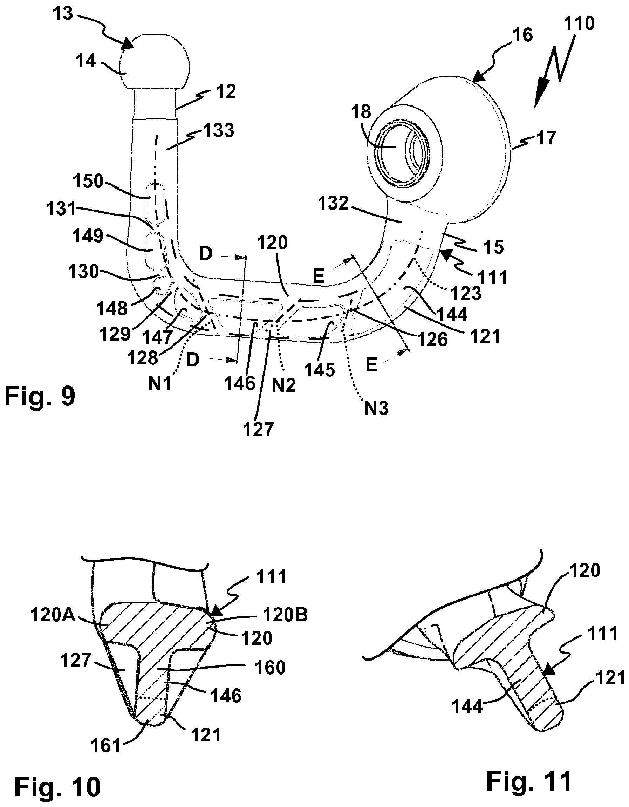

Der Kupplungsarm 111 weist einen in der Gebrauchsstellung G oben verlaufenden Traggurt 120 sowie einen in der Gebrauchsstellung G unten, das heißt näher bei einer Fahrbahnoberfläche F verlaufenden Traggurt 121 auf. Der Traggurt 121 bildet einen integralen Bestandteil eines Steges 160, der winkelig, beispielsweise rechtwinkelig, vom Traggurt 120 absteht. Ein vom Traggurt 120 am weitesten entfernter Endbereich oder Endabschnitt 161 des Steges 160 bildet nämlich den Traggurt 121. Der Traggurt 120 steht mit Abschnitten 120A und 120B seitlich vor den Steg 160 vor, sodass insgesamt ein T-förmiger Querschnitt (siehe Figuren 10 und 11) gebildet ist. Mithin bilden also die Abschnitte 120A und 120B einen oberen Querschenkel des Grundprofils des Kupplungsarms 111, von dem der Steg 160 als Grundschenkel absteht.

Der Endabschnitt 161, der einer Fahrbahnoberfläche F am nächsten ist, erstreckt sich zwischen den Längsendbereichen 12, 15. An dem Steg 160 ist eine ihn verstärkende Fachwerkstruktur 124 oder Rippenstruktur 125 vorgesehen, die sich zwischen den Traggurten 120 und 121 erstreckende Verbindungsstreben 126, 127, 128, 129, 130 und 131 umfasst. Prinzipiell ist die Ausrichtung der Verbindungsstreben 126-130 ähnlich derjenigen der bereits erläuterten Verbindungsstreben 26-31 des Kupplungsarms 11. Mithin sind also auch gleichsinnig schräggeneigte oder gegensinnig schräggeneigten Verbindungsstreben vorhanden, so zum Beispiel die gegensinnig geneigten Verbindungsstreben 127 und 128, die funktional den Verbindungsstreben 27, 28 entsprechen. Hierzu sei auf die Erläuterung im Zusammenhang mit Figur 3 des vorherigen Ausführungsbeispiels verwiesen.

Zwischen den Verbindungsstreben 126-131 sind Aussparungen 134, 135, 136, 137, 138, 139, 140 vorhanden, deren Geometrie und/oder Querschnitt aufgrund der Ausrichtung und geometrischen Gestalt der Verbindungsstreben 126-131 derjenigen der Aussparungen 34-40 entspricht.

In den Aussparungen 134-140 befinden sich Wandabschnitte 144, 145, 146, 147, 148, 149, 150, die beispielsweise von der Wandfläche des Steges 160 bereitgestellt werden. Die Verbindungsstreben 126-131 stehen seitlich vor die Wandfläche des Steges 160 und somit seitlich vor die Wandabschnitte 144-150 vor, vorzugsweise an den beiden einander entgegengesetzten Frontflächen oder Stirnseiten des Steges 160, sodass dieser beidseitig durch die Verrippung bzw. die Verbindungsstreben 127-131 verstärkt ist.

Jedenfalls verbinden die Verbindungsstreben 127-131 die Traggurte 120-121, was dem Kupplungsarm 111 eine hohe Belastbarkeit verleiht.

Die Verbindungsstreben 127-131 haben an einem Fußbereich oder an einem Verbindungsbereich mit dem Traggurt 120 etwa dieselbe Querbreite wie der Traggurt 120 und verjüngen sich zum Traggurt 121 hin, sodass im Querschnitt eine dreieckförmige Gestalt der Verbindungsstreben 127-131 gebildet ist. Man sieht das beispielsweise in Figur 10 an der Verbindungsstrebe 127.

Der Kupplungsarm 111 ist also im Ergebnis im Bereich des Traggurts 120 relativ breit und verjüngt sich zum Traggurt 121 hin, was zum Leichtbau beiträgt. Die Verbindungsstreben 127-131 tragen jedoch trotz dieser an sich relativ filigranen Struktur effektiv dazu bei, dass der Kupplungsarm 111 hohen Belastungen, auch dynamischen Belastungen, standhält.

Wie schon beim Kupplungsarm 11 erläutert, ist es vorteilhaft, wenn sich die Rippenstruktur 125 oder Fachwerkstruktur 124 nicht bis unmittelbar zu den Längsendbereichen 12, 15 erstreckt, sondern dass beispielsweise Abschnitte 132, 133 ohne Verrippung vorhanden sind. Allerdings ist beispielsweise in Figur 7 sichtbar, dass vorzugsweise auch im Verbindungsbereich zwischen dem Kupplungsarm 111 und dem Halteende 16 eine durch vorstehende Rippenabschnitte verstärkte Struktur möglich ist, beispielsweise mit Rippen 162.

Bei einem in Figur 12 und Figur 13 dargestellten Kupplungsarm 211 einer Anhängekupplung 210 sind die bereits erläuterten Merkmale, nämlich Längsendbereiche 12, 15 vorhanden, zwischen denen sich Traggurte 220, 221 mit einem Längsverlauf 223 erstrecken.

An dem Längsendbereich 12 ist als ein Kupplungskörper 13 eine Kupplungskugel 14 angeordnet, an die beispielsweise der Anhänger 190 oder der Lastenträger 290 angekuppelt werden kann.

Der Kupplungsarm 211 hat beispielsweise den bereits erläuterten zylindrischen Abschnitt 51, an dem der Kupplungskörper 13 angeordnet ist, wobei im Unterschied zu den vorigen Ausführungsbeispielen kein nennenswerter gerader Abschnitt in der Art des Abschnitts 52 vorhanden ist. Vielmehr sitzt der Halsabschnitt oder Zylinder 51 unmittelbar am Endbereich einer Krümmungspartie 253, die ihrerseits wiederum in einen geraden Abschnitt 254 übergeht. An den geraden Abschnitt 254 schließt sich eine weitere Krümmungspartie 255 an, an die wiederum sich ein gerader Abschnitt 256 anschließt. Dieser bildet das Längsende oder den Längsendbereich 15 oder weist diesen auf.

Der Kupplungsarm 211 ist von dem Kraftfahrzeug 90 entfernbar und an diesem wieder anordenbar, beispielsweise anhand einer Steckverbindung. An einem Querträger 71 einer Tragstruktur 70, die beispielsweise am Heck des Kraftfahrzeugs, insbesondere dessen Karosserie, angeordnet und/oder befestigt ist, ist ein Halter 272 der Anhängekupplung 210 vorgesehen. Der Halter 272 ist am Querträger 71 befestigt, beispielsweise mit diesem verschraubt.

Am Längsendbereich 15, also einem Halteende 216, ist ein Steckvorsprung 217 vorhanden, der in eine Steckaufnahme 273 des Halters 272 einsteckbar ist.

Der Kupplungsarm 211 ist am Halter 272 anhand einer Fixiereinrichtung 260 fixierbar. Die Fixiereinrichtung 260 umfasst Fixierkörper 262, beispielsweise Kugeln oder dergleichen andere Formschlusselemente, welche durch einen Betätigungskörper 261 in Eingriff mit einer Formschlussaufnahme oder Verriegelungsaufnahme 274 an der Steckaufnahme 273 bringbar sind. Beispielsweise betätigt der Betätigungskörper 261 die Kugeln oder Fixierkörper 262 nach radial außen aus einem Innenraum des Steckvorsprungs 217 durch in diesem angeordnete Kanäle, sodass die Fixierkörper 262 in einer Fixierstellung in die Verriegelungsaufnahme 274 eingreifen. Zur insbesondere linearen Verstellung des Betätigungskörpers 261 dient eine Betätigungseinrichtung mit beispielsweise einem Handrad 263, wobei ohne weiteres auch eine motorische Betätigung möglich wäre. Um zusätzlichen formschlüssigen Verriegeln und Halten dient zusätzlich noch eine Kombination von Formschlusskonturen, die beim Anstecken oder Einstecken des Steckvorsprungs 217 in die Steckaufnahme 273 in Eingriff kommt. Die Formschlusskonturen umfassen beispielsweise keilförmige, seitlich vor den Steckvorsprung 217 vorstehende Formschlussvorsprünge, die in korrespondierende, ebenfalls keilförmige Formschlussaufnahmen 275 des Halters 272 eingreifen.

Der Kupplungsarm 211 hat sich zwischen seinen Traggurten 220, 221 erstreckende Verbindungsstreben 226, 227, 228, 229, 230, 231, 231A, 242A, 242B, die insgesamt eine Fachwerkstruktur 224 oder eine Rippenstruktur 225 bilden und somit zur Aussteifung, gleichzeitig zum Leichtbau des Kupplungsarms 211 beitragen. Im Unterschied zu den vorherigen Ausführungsbeispielen erstreckt sich die Rippenstruktur 225 oder Fachwerkstruktur 224 nahezu ganz bis zum Längsendbereich 12. Am anderen Längsendbereich 15 hingegen ist ein Abschnitt 232 vorgesehen, der keine Verrippung oder fachwerkartige Verstärkung aufweist. An diesem Abschnitt 232 ist der Steckvorsprung 217 vorgesehen.

Zwischen den Verbindungsstreben 226-242B sind Aussparungen 234, 235, 236, 237, 238, 239, 240, 242, 243 vorgesehen, die abgesehen von der Aussparung 242 keine besondere Funktion haben. Die Aussparungen 234, 235, 236, 237, 238, 239, 240, 242, 243 können beispielsweise als Durchbrüche ausgestaltet sein. Es ist aber auch möglich, dass dort beispielsweise Wände oder Wandabschnitte vorhanden sind. So ist beispielsweise ersichtlich aus Figur 12 in den Aussparungen 234, 235, 236, 237, 238 jeweils ein Wandabschnitt 244, 245, 246, 247, 248 vorhanden.

Die 242 hingegen bildet eine Aufnahme für eine Kontakteinheit 342, beispielsweise eine Anhängersteckdose. Die Kontakteinheit 342 kann quer zum Längsverlauf 223 in die Aussparung oder Aufnahme 242 eingesteckt werden und wird dort vorzugsweise formschlüssig gehalten. Die Kontakteinheit 342 ermöglicht beispielsweise die Verbindung zwischen einerseits einem Bordnetz 94 des Kraftfahrzeugs 90 und andererseits einem Bordnetz 194 des Anhängers 190 oder des Lastenträgers 290. So kann anhand der Kontakteinheit 342 beispielsweise eine Leuchtenbaugruppe des Anhängers 190 oder des Lastenträgers 290 mit Strom versorgt und angesteuert werden.

Man erkennt, dass auch beim Kupplungsarm 212 die Verbindungsstreben 226, 227, 228, 229, 230, 231, 231A, 242A, 242B Schrägverläufe schräg zur Längsrichtung des Traggurts 220 oder 221 in dem jeweiligen Abschnitt des Kupplungsarms 212 vorhanden sind.

Die Verbindungsstreben 242A und 242B sind darüber hinaus teilweise rund, so dass sie einen runden Innenumfang der Aufnahme oder Aussparung 242, passend zu der Kontakteinheit 342 begrenzen.

Auch der Verlauf der Traggurte 220, 221 ist an die Umfangskontur der Aussparung oder Aufnahme 242 angepasst. Beispielsweise erstrecken sich Abschnitte 242C und 242D in Richtung des Längsverlaufs 223 um die Aussparung 242 herum. Bei dem Abschnitt 242C des oberen Traggurts 220 ist dabei zu bemerken, dass dieser eine Rundung aufweist.

Am Ausführungsbeispiel des Kupplungsarms 212 wird auch deutlich, dass Verbindungsstreben bei einem erfindungsgemäßen Kupplungsarm nicht nur winkelig zueinanderstehen können, beispielsweise V-förmig zueinanderstehen können, sondern auch Kreuzungen aufweisen können. Beispielsweise ist eine Kreuzung 231C zwischen den Verbindungsstreben 231 und 230 vorhanden. Man kann auch sagen, dass die Verbindungsstrebe 231 die Verbindungsstreben 231A und 230 miteinander verbindet und somit für eine zusätzliche Aussteifung sorgt.

Am Kupplungsarm 211 ist weiterhin vorteilhaft eine Öse 280 für ein Abreißseil vorhanden, beispielsweise am Traggurt 221. Somit ist die Öse 280 an einer besonders zugfesten Komponente des Kupplungsarms 211 angeordnet.

## Patentansprüche

1. Anhängekupplung für ein Kraftfahrzeug (90), mit einem Kupplungsarm (11, 111, 211), an dessen freiem Längsendbereich (12) ein Kupplungskörper (13), insbesondere eine Kupplungskugel (14), zum Ankuppeln eines Anhängers (190) oder Lastenträgers (290) angeordnet ist und dessen anderer Längsendbereich (15) ein Halteende (16) zum Halten und/oder beweglichen Lagern an einer Tragstruktur (70) des Kraftfahrzeugs (90) bildet, wobei der Kupplungsarm (11, 111, 211) Traggurte (20, 21) aufweist, die sich in einem Querabstand (22) zueinander zwischen den Längsendbereichen (12, 15) entlang eines Längsverlaufs (23) des Kupplungsarms (11, 111, 211) erstrecken, wobei die Traggurte (20, 21) durch eine Mehrzahl von Verbindungsstreben (26-31) in der Art einer Fachwerkstruktur (24) oder Rippenstruktur (25) miteinander verbunden sind, und wobei der Kupplungsarm (11, 111, 211) mindestens eine Aufnahme (242) für eine Kontakteinheit (342), insbesondere eine Steckdose, zur Herstellung elektrischer und/oder optischer Verbindungen zwischen einem Bordnetz des Kraftfahrzeugs (90) und einem Anhänger oder Lastenträger (290) aufweist, **dadurch gekennzeichnet, dass** der Kupplungsarm (211) mindestens eine Verbindungsstrebe (231A, 231, 230, 229) in einem Abstand zu der Aufnahme (242) für die Kontakteinheit (342) bezüglich des Längsverlaufs (23) des Kupplungsarms (211) aufweist.

2. Anhängekupplung nach Anspruch 1, **dadurch gekennzeichnet, dass** zwischen mindestens zwei Verbindungsstreben (26-31) eine Durchtrittsöffnung (46A) vorhanden ist.

3. Anhängekupplung nach Anspruch 1 oder 2, **dadurch gekennzeichnet, dass** quer zu dem Längsverlauf (23) des Kupplungsarms (11, 111, 211) zwischen mindestens zwei entlang des Längsverlaufs (23) hintereinander angeordneten Verbindungsstreben (26-31) mindestens ein Wandabschnitt (44-50) vorhanden ist, wobei mindestens eine Verbindungsstrebe (26-31) vor den Wandabschnitt (44-50) quer zum Längsverlauf (23) zu mindestens einer Seite vorsteht.

4. Anhängekupplung nach Anspruch 3, **dadurch gekennzeichnet, dass** die entlang des Längsverlaufs (23) hintereinander angeordneten Verbindungsstreben (26-31) an einander entgegengesetzten Seiten jeweils vor den mindestens einen Wandabschnitt (44-50) vorstehen und/oder dass mindestens einer der Traggurte (20, 21), vorzugsweise beide Traggurte (20, 21), an mindestens einer Seite, vorzugsweise beidseits oder beidseitig, vor den mindestens einen Wandabschnitt (44-50) vorstehen und/oder dass die Traggurte (20, 21) und der Wandabschnitt (44-50) einen T-förmigen oder Doppel-T-förmigen oder knochenförmigen Querschnitt bilden und/oder dass der Wandabschnitt (44-50) schmaler als mindestens einer der Traggurte (20, 21) ist und an einem von diesem Traggurt (20, 21) am weitesten entfernten Bereich der andere Traggurt (20, 21) als integraler Bestandteil des Wandabschnitts (44-50) ausgebildet ist oder durch den Wandabschnitt (44-50) gebildet ist und/oder dass der Wandabschnitt (44-50) etwa rechtwinkelig und/oder etwa mittig von einer längeren Seite oder Flachseite mindestens eines der Traggurte (20, 21) absteht.

5. Anhängekupplung nach einem der vorhergehenden Ansprüche, **dadurch gekennzeichnet, dass** der Kupplungsarm (11, 111, 211) an einem oder beiden der Längsendbereiche (12, 15) einen homogenen Querschnitt ohne Vertiefung und/oder keine Verbindungsstrebe (26-31) aufweist.

6. Anhängekupplung nach einem der vorhergehenden Ansprüche, **dadurch gekennzeichnet, dass** mindestens eine Verbindungsstrebe (26-31) eine Schrägneigung bezüglich des Längsverlaufs (23) des Kupplungsarms (11, 111, 211) aufweist oder bezüglich des Längsverlaufs (23) des Kupplungsarms (11, 111, 211) etwa rechtwinkelig zu mindestens einem Traggurt (20, 21), insbesondere rechtwinkelig zu mindestens einem Traggurt (20, 21) bezüglich des Längsverlaufs (23) des Kupplungsarms (11, 111, 211) orientiert ist.

7. Anhängekupplung nach einem der vorhergehenden Ansprüche, **dadurch gekennzeichnet, dass** mindestens zwei, insbesondere bezüglich des Längsverlaufs (23) unmittelbar nebeneinander angeordnete, Verbindungsstreben (26-31) eine gleichsinnige Schrägneigung bezüglich des Längsverlaufs (23) des Kupplungsarms (11, 111, 211) aufweisen und/oder dass der Kupplungsarm (11, 111, 211) mindestens zwei entlang des Längsverlaufs (23) hintereinander angeordnete Verbindungsstreben (26-31) aufweist, die eine bezüglich des Längsverlaufs (23) des Kupplungsarms (11, 111, 211) gegensinnige Schrägneigung aufweisen, wobei vorteilhaft vorgesehen ist, dass sich die Verbindungsstreben (26-31) kreuzen oder kreuzungsfrei bezüglich des Längsverlaufs (23) hintereinander angeordnet sind und/oder dass die Verbindungsstreben (26-31) X-förmig oder V-förmig angeordnet sind.

8. Anhängekupplung nach einem der vorhergehenden Ansprüche, **dadurch gekennzeichnet, dass** die Aufnahme (242) an mindestens einer Seite, vorzugsweise beidseitig, durch eine sich zwischen den Traggurten (20, 21) erstreckende Verbindungsstrebe (26-31) begrenzt ist und/oder dass der Querabstand (22) zwischen den Traggurten (20, 21) im Bereich der Aufnahme (242) für die Kontakteinheit (342) größer als in Bezug auf den Längsverlauf (23) des Kupplungsarms (11, 111, 211) neben der Aufnahme (242) für die Kontakteinheit (342) ist und/oder dass der Kupplungsarm (211) mehrere Verbindungsstreben (231A, 231, 230, 229) in einem Abstand zu der Aufnahme (242) für die Kontakteinheit (342) bezüglich des Längsverlaufs (23) des Kupplungsarms (211) aufweist.

9. Anhängekupplung nach einem der vorhergehenden Ansprüche, **dadurch gekennzeichnet, dass** sich mindestens einer der Traggurte (20, 21) an einer Oberseite oder Unterseite des Kupplungsarms (11, 111, 211) erstreckt, wenn dieser seine zum Tragen eines Lastenträgers (290) oder zum Ziehen eines Anhängers (190) geeignete und vor ein Heck des Kraftfahrzeugs (90) vorstehende Gebrauchsstellung einnimmt und/oder dass ein Querschnitt des Kupplungsarms (11, 111, 211) durch mindestens eine Verbindungsstrebe (26-31), die die im Querabstand zueinander einander gegenüberliegenden Traggurte (20, 21) verbindet, dreieckförmig oder V-förmig ist.

10. Anhängekupplung nach einem der vorhergehenden Ansprüche, **dadurch gekennzeichnet, dass** zwei der Traggurte (120, 121) oder die Traggurte (120, 121) bezüglich des Längsverlaufs (43) des Kupplungsarms (11, 111, 211) eine unterschiedliche Querbreite aufweisen und/oder dass ein Traggurt (120) quer zum Längsverlauf (23) des Kupplungsarms (111) mindestens doppelt so breit, vorzugsweise mindestens dreimal so breit, wie ein oder der andere Traggurt (121) ist und/oder dass mindestens eine Verbindungsstrebe (26-31) und/oder mindestens ein Traggurt (20, 21) an mindestens einer Queraußenseite eine ausgerundete oder gekrümmte Außenkontur aufweist und/oder dass mindestens eine Verbindungsstrebe (26-31) an einem Fußbereich, an welchem sie mit einem der Traggurte (20, 21) verbunden ist, einen größeren Querschnitt aufweist als an einem sich zwischen den Traggurten (20, 21) erstreckenden Zwischenabschnitt und/oder dass der Kupplungsarm (11, 111, 211) entlang des Längsverlaufs (23) mindestens eine Krümmungspartie, insbesondere mindestens zwei Krümmungspartien, aufweist.

11. Anhängekupplung nach einem der vorhergehenden Ansprüche, **dadurch gekennzeichnet, dass** die Querschnitte der Verbindungsstreben (26-31) und/oder die Abstände zwischen den Verbindungsstreben (26-31) und/oder eine Winkelorientierung der Verbindungsstreben (26-31) relativ zueinander in Bezug auf einen Kraftverlauf entlang des Kupplungsarms (11, 111, 211) bei Benutzung durch einen Lastenträger (290) oder Anhänger angepasst ist und/oder dass eine Anzahl von Verbindungsstreben (26-31) und/oder ein Querschnitt oder eine Querschnittsfläche der Verbindungsstreben (26-31) im Bereich des Halteendes (16) größer als im Bereich des Kupplungskörpers (13) ist.

12. Anhängekupplung nach einem der vorhergehenden Ansprüche, **dadurch gekennzeichnet, dass** mindestens zwei Verbindungsstreben (26-31) zur Übertragung von Zugkräften und/oder Druckkräften und/oder Zugspannungen und/oder Druckspannungen und/oder Torsionen zwischen den Traggurten (20, 21) im Sinne einer Kompensation der jeweiligen Belastung, insbesondere von Zugspannungen und Druckspannungen, entlang des Längsverlaufs (23) nebeneinander angeordnet sind.

13. Anhängekupplung nach einem der vorhergehenden Ansprüche, **dadurch gekennzeichnet, dass** von einem Traggurt (20, 21) ein Steg (160) winkelig, insbesondere eine T-Form bildend, absteht, wobei ein am weitesten von dem Traggurt (20, 21) entfernter Abschnitt des Steges (160) den anderen Traggurt (20, 21) bildet oder aufweist und/oder dass der Kupplungsarm (11, 111, 211) mindestens drei Traggurte (20, 21) aufweist, die an Kantenbereichen des Kupplungsarms (11, 111, 211) verlaufen und von denen mindestens zwei Traggurte (20, 21) anhand einer Mehrzahl von Verbindungsstreben (26-31) miteinander verbunden sind und/oder dass mindestens eine Verbindungsstrebe (26-31) etwa rechtwinkelig und/oder etwa mittig von einer längeren Seite oder Flachseite mindestens eines der Traggurte (20, 21) absteht.

14. Anhängekupplung nach einem der vorhergehenden Ansprüche, **dadurch gekennzeichnet, dass** an dem Halteende (16) ein Steckvorsprung (217) zum Einstecken in eine Steckaufnahme (273) eines am Kraftfahrzeug (90) befestigten oder befestigbaren Halters der Anhängekupplung oder ein Lagerkopf zum beweglichen Lagern an einem am Kraftfahrzeug (90) befestigten oder befestigbaren Lager oder mindestens eine Montagekontur, insbesondere mindestens eine Schrauböffnung, zum Montieren an dem Kraftfahrzeug angeordnet ist.

15. Anhängekupplung nach einem der vorhergehenden Ansprüche, **dadurch gekennzeichnet, dass** der Kupplungsarm (11, 111, 211) entlang des Längsverlaufs (23) mindestens 3, vorzugsweise mindestens 4, insbesondere mindestens 5 Verbindungsstreben (26-31) aufweist und/oder dass der Kupplungsarm (11, 111, 211), insbesondere die Traggurte (20, 21) und die Verbindungsstreben (26-31), aus Metall, insbesondere Stahl oder Aluminium, und/oder Kunststoff, insbesondere einem faserverstärkten Kunststoff, besteht.

## Claims

1. Trailer coupling for a motor vehicle (90) with a coupling arm (11, 111, 211), at the free longitudinal end section (12) of which there is provided a coupling body (13), in particular a coupling ball (14), for attaching a trailer (190) or load carrier (290), with its other longitudinal end section (15) forming a holding end (16) for holding and/or movable mounting on a support structure (70) of the motor vehicle (90), wherein the coupling arm (11, 111, 211) has support ties (20, 21) which extend at a lateral distance (22) from one another between the two longitudinal end sections (12, 15) along the longitudinal course (23) of the coupling arm (11, 111, 211), wherein the support ties (20, 21) are linked together by a multiplicity of connecting struts (26-31) in the manner of a framework structure (24) or rib structure (25), and wherein the coupling arm (11, 111, 211) has at least one location (242) for a contact unit (342) and/or optical connections between an electrical system of the motor vehicle (90) and a trailer or load carrier (290), **characterised in that** the coupling arm (211) has at least one connecting strut (231A, 231, 230, 229) at a distance from the location (242) for the contact unit (342), with respect to the longitudinal course (23) of the coupling arm (211).

2. Trailer coupling according to claim 1, **characterised in that** a through opening (46A) is provided between at least two connecting struts (26-31).

3. Trailer coupling according to claim 1 or 2, **characterised in that** at least one wall section (44-50) is provided transversely to the longitudinal course (23) of the coupling arm (11, 111, 211) between at least two connecting struts (26-31) arranged consecutively along the longitudinal course (23), wherein at least one connecting strut (26-31) protrudes from the wall section (44-50), transversely to the longitudinal course (23), on at least one side.

4. Trailer coupling according to claim 3, **characterised in that** the connecting struts (26-31) arranged one behind the other along the longitudinal course (23) on opposite sides protrude in each case from the wall section or sections (44-50), and/or that at least one of the support ties (20, 21), preferably both support ties (20, 21), protrude from the wall section or sections (44-50) on at least one side, preferably on both sides or on either side, and/or that the support ties (20, 21) and the wall section (44-50) form a T-shaped or double T-shaped or bone-shaped cross-section, and/or that the wall section (44-50) is narrower than at least one of the support ties (20, 21) and is formed on an area of the other support tie (20, 21) furthest away from this support tie (20, 21) as an integral part of the wall section (44-50) or is formed by the wall section (44-50), and/or that the wall section (44-50) protrudes roughly at a right-angle and/or roughly centrally from a longer side or flat side of at least one of the support ties (20, 21).

5. Trailer coupling according to any of the preceding claims, **characterised in that** the coupling arm (11, 111, 211) has at one or both of the longitudinal end sections (12, 15) a homogenous cross-section with no recess and/or no connecting struts (26-31).

6. Trailer coupling according to any of the preceding claims, **characterised in that** at least one connecting strut (26-31) has an inclination relative to the longitudinal course (23) of the coupling arm (11, 111, 211) or with reference to the longitudinal course (23) of the coupling arm (11, 111, 211) is oriented approximately at a right-angle to at least one support tie (20, 21), in particular at a right-angle to at least one support tie (20, 21) relative to the longitudinal course (23) of the coupling arm (11, 111, 211).

7. Trailer coupling according to any of the preceding claims, **characterised in that** at least two connecting struts (26-31), in particular arranged directly adjacent with respect to the longitudinal course (23), have an inclination in the same direction relative to the longitudinal course (23) of the coupling arm (11, 111, 211) and/or that the coupling arm (11, 111, 211) has at least two connecting struts (26-31) arranged consecutively along the longitudinal course (23) and having an inclination in the opposite direction with respect to the longitudinal course (23) of the coupling arm (11, 111, 211), wherein advantageously it is provided that the connecting struts (26-31) intersect or are arranged consecutively with respect to the longitudinal course (23) and/or that the connecting struts (26-31) are arranged in an X-shape or a V-shape.

8. Trailer coupling according to any of the preceding claims, **characterised in that** the location (242) is bounded on at least one side, preferably on both sides, by a connecting strut (26-31) extending between the support ties (20, 21) and/or that the lateral distance (22) between the support ties (20, 21) is greater in the area of the location (242) for the contact unit (342) than relative to the longitudinal course (23) of the coupling arm (11, 111, 211) next to the location (242) for the contact unit (342) and/or that the coupling arm (211) has several connecting struts (231A, 231, 230, 229) at a distance from the location (242) for the contact unit (342), with respect to the longitudinal course (23) of the coupling arm (211).

9. Trailer coupling according to any of the preceding claims, **characterised in that** at least one of the support ties (20, 21) extends on a top or bottom of the coupling arm (11, 111, 211) when the latter adopts its position of use suitable for carrying a load carrier (290) or for pulling a trailer (190) and protruding from the rear end of the motor vehicle (90) and/or that a cross-section of the coupling arm (11, 111, 211), through at least one connecting strut (26-31) which connects the support ties (20, 21) lying at the lateral distance opposite one another, is triangular or V-shaped.

10. Trailer coupling according to any of the preceding claims, **characterised in that** two of the support ties (120, 121) or the support ties (120, 121) have a different lateral width relative to the longitudinal course (23) of the coupling arm (11, 111, 211) and/or that one support tie (120) is at least twice as wide, preferably at least three times as wide, transversely to the longitudinal course (23) of the coupling arm (111), as one or the other support tie (121) and/or that at least one support tie (20, 21) on at least one lateral outside has a rounded or curved outer contour and/or that at least one connecting strut (26-31), at a base area at which it is connected to one of the support ties (20, 21), has a greater cross-section than an intermediate section extending between the support ties (20, 21) and/or that the coupling arm (11, 111, 211) has along the longitudinal course (23) at least one curved section, in particular at least two curved sections.

11. Trailer coupling according to any of the preceding claims, **characterised in that** the cross-sections of the connecting struts (26-31) and/or the distances between the connecting struts (26-31) and/or an angular orientation of the connecting struts (26-31) relative to one another is or are matched in respect of a force progression along the coupling arm (11, 111, 211) when used by a load carrier (290) or trailer and/or that a number of connecting struts (26-31) and/or a cross-section or a cross-sectional area of the connecting struts (26-31) is greater in the area of the holding end (16) than in the area of the coupling body (13).

12. Trailer coupling according to any of the preceding claims, **characterised in that** at least two connecting struts (26-31) are arranged next to one another along the longitudinal course (23) for the transfer of tensile forces and/or compressive forces and/or tensile stresses and/or compressive stresses and/or torsions between the support ties (20, 21) for the purpose of compensating for the respective loading, in particular of tensile stresses and compressive stresses.

13. Trailer coupling according to any of the preceding claims, **characterised in that** from one support tie (20, 21) a bar (160) protrudes at an angle, in particular forming a T-shape, wherein a section of the bar (160) furthest removed from the support tie (20, 21) forms or has the other support tie (20, 21), and/or that the coupling arm (11, 111, 211) has at least three support ties (20, 21) which run on the edge areas of the coupling arm (11, 111, 211) and of which at least two support ties (20, 21) are joined together with the aid of a multiplicity of connecting struts (26-31), and/or that at least one connecting strut (26-31) protrudes roughly at a right-angle and/or roughly centrally from a longer side or flat side of at least one of the support ties (20, 21).

14. Trailer coupling according to any of the preceding claims, **characterised in that** on the holding end (16) there is provided a plug projection (217) for insertion in a plug-in location (273) of a holder of the trailer coupling which is or may be fastened to the motor vehicle (90) or a bearing head for movable mounting on a bearing which is or may be fastened to the motor vehicle (90) or at least one fitting contour, in particular at least one screw hole, for fitting to the motor vehicle.

15. Trailer coupling according to any of the preceding claims, **characterised in that** the coupling arm (11, 111, 211) has along the longitudinal course (23) at least 3, preferably at least 4, in particular preferably at least 5 connecting struts (26-31), and/or that the coupling arm (11, 111, 211), in particular the support ties (20, 21) and the connecting struts (26-31), are made of metal, in particular steel or aluminium, and/or plastic, in particular a fibre-reinforced plastic.

## Revendications

1. Attelage pour un véhicule automobile (90), avec un bras d'attelage (11, 111, 211) au niveau de la zone d'extrémité longitudinale libre (12) duquel un corps d'attelage (13), en particulier une rotule d'attelage (14), pour l'attelage d'une remorque (190) ou d'un support de charge (290) est agencée et dont l'autre zone d'extrémité longitudinale (15) forme une extrémité de retenue (16) pour la retenue et/ou le logement mobile au niveau d'une structure porteuse (70) du véhicule automobile (90), dans lequel le bras d'attelage (11, 111, 211) présente des sangles de suspension (20, 21) qui s'étendent à une distance transversale (22) l'une de l'autre entre les zones d'extrémité longitudinale (12, 15) le long d'une étendue longitudinale (23) du bras d'attelage (11, 111, 211), dans lequel les sangles de suspension (20, 21) sont reliées entre elles par une pluralité de barres de liaison (26-31) comme une structure en treillis (24) ou une structure de nervure (25), et dans lequel le bras d'attelage (11, 111, 211) présente au moins un logement (242) pour une unité de contact (342), en particulier une prise, pour l'établissement de liaisons électriques et/ou optiques entre un réseau de bord du véhicule automobile (90) et une remorque ou un support de charge (290), **caractérisé en ce que** le bras d'attelage (211) présente au moins une barre de liaison (231A, 231, 230, 229) à une distance du logement (242) pour l'unité de contact (342) par rapport à l'étendue longitudinale (23) du bras d'attelage (211).

2. Attelage selon la revendication 1, **caractérisé en ce qu'**une ouverture de passage (46A) est présente entre au moins deux barres de liaison (26-31).

3. Attelage selon la revendication 1 ou 2, **caractérisé en ce qu'**au moins une section de paroi (44-50) est présente transversalement à l'étendue longitudinale (23) du bras d'attelage (11, 111, 211) entre au moins deux barres de liaison (26-31) agencées l'une derrière l'autre le long de l'étendue longitudinale (23), dans lequel au moins une barre de liaison (26-31) dépasse de la section de paroi (44-50) transversalement à l'étendue longitudinale (23) vers au moins un côté.

4. Attelage selon la revendication 3, **caractérisé en ce que** les barres de liaison (26-31) agencées l'une derrière l'autre le long de l'étendue longitudinale (23) dépassent au niveau de côtés opposés respectivement de l'au moins une section de paroi (44-50) et/ou qu'au moins une des sangles de suspension (20, 21), de préférence les deux sangles de suspension (20, 21) dépassent, au niveau d'au moins un côté, de préférence de part et d'autre ou des deux côtés, de l'au moins une section de paroi (44-50) et/ou que les sangles de suspension (20, 21) et la section de paroi (44, 50) forment une section transversale en forme de T ou de double T ou en forme d'os et/ou que la section de paroi (44-50) est plus étroite qu'au moins une des sangles de suspension (20, 21) et au niveau d'une zone le plus éloignée de cette sangle de suspension (20, 21) l'autre sangle de suspension (20, 21) est réalisée comme partie intégrante de la section de paroi (44-50) ou est formée par la section de paroi (44-50) et/ou que la section de paroi (44-50) dépasse à peu près à angle droit et/ou à peu près au milieu d'un côté plus long ou côté plat au moins d'une des sangles de suspension (20, 21).

5. Attelage selon l'une des revendications précédentes, **caractérisé en ce que** le bras d'attelage (11, 111, 211) présente au niveau d'une ou des deux des zones d'extrémité longitudinale (12, 15) une section transversale homogène sans cavité et/ou aucune barre de liaison (26, 31).

6. Attelage selon l'une des revendications précédentes, **caractérisé en ce qu'**au moins une barre de liaison (26-31) présente une inclinaison oblique par rapport à l'étendue longitudinale (23) du bras d'attelage (11, 111, 211) ou est orientée par rapport à l'étendue longitudinale (23) du bras d'attelage (11, 111, 211) à peu près à angle droit par rapport à au moins une sangle de suspension (20, 21), en particulier à angle droit par rapport à au moins une sangle de suspension (20, 21) par rapport à l'étendue longitudinale (23) du bras d'attelage (11, 111, 211).

7. Attelage selon l'une des revendications précédentes, **caractérisé en ce qu'**au moins deux barres de liaison (26-31) agencées en particulier par rapport à l'étendue longitudinale (23) directement l'une à côté de l'autre présentent une inclinaison oblique de même sens par rapport à l'étendue longitudinale (23) du bras d'attelage (11, 111, 211) et/ou que le bras d'attelage (11, 111, 211) présente au moins deux barres de liaison (26-31) agencées le long de l'étendue longitudinale (23) l'une derrière l'autre qui présentent une inclinaison oblique en sens inverse par rapport à l'étendue longitudinale (23) du bras d'attelage (11, 111, 211), dans lequel il est avantageusement prévu que les barres de liaison (26-31) se croisent ou soient agencées sans croisement par rapport à l'étendue longitudinale (23) l'une derrière l'autre et/ou que les barres de liaison (26-31) soient agencées en forme de X ou de V.

8. Attelage selon l'une des revendications précédentes, **caractérisé en ce que** le logement (242) est délimité au niveau d'au moins un côté, de préférence des deux côtés, par une barre de liaison (26-31) s'étendant entre les sangles de suspension (20, 21) et/ou que la distance transversale (22) entre les sangles de suspension (20, 21) dans la zone du logement (242) pour l'unité de contact (342) est supérieure à celle par rapport à l'étendue longitudinale (23) du bras d'attelage (11, 111, 211) à côté du logement (242) pour l'unité de contact (342) et/ou que le bras d'attelage (211) présente plusieurs barres de liaison (231A, 231, 230, 229) à une distance du logement (242) pour l'unité de contact (342) par rapport à l'étendue longitudinale (23) du bras d'attelage (211).

9. Attelage selon l'une des revendications précédentes, **caractérisé en ce qu'**au moins une des sangles de suspension (20, 21) s'étend au niveau d'un côté supérieur ou côté inférieur du bras d'attelage (11, 111, 211) lorsque celui-ci occupe sa position d'utilisation dépassant d'une partie arrière du véhicule automobile (90) et appropriée pour le port d'un support de charge (290) ou pour la traction d'une remorque (190) et/ou qu'une section transversale du bras d'attelage (11, 111, 211) est triangulaire ou en forme de V, par au moins une barre de liaison (26-31) qui relie les sangles de suspension (20, 21) opposées dans la distance transversale l'une à l'autre.

10. Attelage selon l'une des revendications précédentes, **caractérisé en ce que** deux des sangles de suspension (120, 121) ou les sangles de suspension (120, 121) présentent par rapport à l'étendue longitudinale (43) du bras d'attelage (11, 111, 211) une largeur transversale différente et/ou qu'une sangle de suspension (120) transversalement à l'étendue longitudinale (23) du bras d'attelage (111) est au moins deux fois plus large, de préférence au moins trois fois plus large qu'une ou l'autre sangle de suspension (121) et/ou qu'au moins une barre de liaison (26-31) et/ou au moins une sangle de suspension (20, 21) présente au niveau d'au moins un côté extérieur transversal un contour extérieur arrondi ou courbé et/ou qu'au moins une barre de liaison (26-31) au niveau d'une zone de pied au niveau de laquelle elle est reliée à une des sangles de suspension (20, 21), présente une section transversale plus grande qu'au niveau d'une section intermédiaire s'étendant entre les sangles de suspension (20, 21) et/ou que le bras d'attelage (11, 111, 211) présente le long de l'étendue longitudinale (23) au moins une partie de courbure, en particulier au moins deux parties de courbure.

11. Attelage selon l'une des revendications précédentes, **caractérisé en ce que** les sections transversales des barres de liaison (26-31) et/ou les distances entre les barres de liaison (26-31) et/ou une orientation angulaire des barres de liaison (26-31) l'une par rapport à l'autre est adaptée par rapport à une étendue de force le long du bras d'attelage (11, 111, 211) lors de l'utilisation par un support de charge (290) ou une remorque et/ou qu'un nombre de barres de liaison (26-31) et/ou une section transversale ou une superficie de section transversale des barres de liaison (26-31) dans la zone de l'extrémité de retenue (16) est supérieure à celle de la zone du corps d'attelage (13).

12. Attelage selon l'une des revendications précédentes, **caractérisé en ce qu'**au moins deux barres de liaison (26-31) sont agencées pour la transmission de forces de traction et/ou de forces de pression et/ou de contraintes de traction et/ou de contraintes de pression et/ou de torsions entre les sangles de suspension (20, 21) au sens d'une compensation de la sollicitation respective, en particulier de contraintes de traction et de contraintes de pression, le long de l'étendue longitudinale (23) l'une à côté de l'autre.

13. Attelage selon l'une des revendications précédentes, **caractérisé en ce qu'**une nervure (160) dépasse d'une sangle de suspension (20, 21) de manière angulaire, en particulier en formant une forme de T, dans lequel une section le plus éloignée de la sangle de suspension (20, 21) de la nervure (160) forme ou présente l'autre sangle de suspension (20, 21) et/ou que le bras d'attelage (11, 111, 211) présente au moins trois sangles de suspension (20, 21) qui s'étendent au niveau de zones d'arête du bras d'attelage (11, 111, 211) et dont au moins deux sangles de suspension (20, 21) sont reliées entre elles au moyen d'une pluralité de barres de liaison (26-31) et/ou qu'au moins une barre de liaison (26-31) dépasse à peu près à angle droit et/ou à peu près au milieu d'un côté plus long ou côté plat au moins d'une des sangles de suspension (20, 21).

14. Attelage selon l'une des revendications précédentes, **caractérisé en ce qu'**une saillie d'enfichage (217) est agencée au niveau de l'extrémité de retenue (16) pour l'enfichage dans un logement d'enfichage (273) d'un support fixé ou pouvant être fixé au véhicule automobile (90) de l'attelage ou une tête de palier est agencée pour le logement mobile au niveau d'un palier fixé ou pouvant être fixé au véhicule automobile (90) ou au moins un contour de montage, en particulier au moins une ouverture de vissage, pour le montage sur le véhicule automobile.

15. Attelage selon l'une des revendications précédentes, **caractérisé en ce que** le bras d'attelage (11, 111, 211) présente le long de l'étendue longitudinale (23) au moins 3, de préférence au moins 4, en particulier au moins 5 barres de liaison (26-31) et/ou que le bras d'attelage (11, 111, 211), en particulier les sangles de suspension (20, 21) et les barres de liaison (26-31) se compose de métal, en particulier d'acier ou d'aluminium, et/ou de matière plastique, en particulier d'une matière plastique renforcée par des fibres.
